# FASCICULE DE BREVET EUROPEEN

(11) **EP 1 757 542 B1**
(45) Date de publication et mention de la délivrance du brevet: **30.07.2008**
(21) Numéro de dépôt: 06291291.0
(22) Date de dépôt: 09.08.2006
(51) Int. Cl.: B65G 51/06, B65D 33/00

(54) **Emballage notamment pour le transport d'objets dans un réseau pneumatique**
Verpackung zum Transport von Gegenständen in pneumatische Rohrleitungen
Package for transporting objects in a pneumatic conveyer system

(30) Priorité: 25.08.2005 FR 0508758
(43) Date de publication de la demande: 28.02.2007
(73) Titulaire: BRINK'S FRANCE, 75009 Paris (FR)
(72) Inventeur: Rat, Daniel, 92600 Asnières sur Seine (FR)
(74) Mandataire: Habasque, Etienne J. Jean-François

(56) Documents cités:
- EP-A- 0 664 264
- EP-A- 1 475 310
- DE-U1- 20 104 886
- FR-A- 2 749 827
- US-A1- 2003 228 077

## Description

La présente invention concerne un emballage notamment pour le transport d'objets.

Plus particulièrement, l'invention se rapporte à un emballage notamment pour le transport d'objets dans un réseau pneumatique.

Une première application de ce type d'emballage concerne le transport de fonds qui se présentent par exemple sous la forme de billets, dans un réseau pneumatique de supermarché ou autres.

Une deuxième application de ce type d'emballage concerne le transport de prélèvements sanguins ou autres entre un local de prélèvement et un local d'analyse, par exemple dans un hôpital.

La demanderesse a déjà proposé dans le document EP-A-0 664 264, un emballage de ce type qui comporte un sac réalisé en matière plastique soudée et comportant une ouverture obturable par un volet rabattable préencollé et sur au moins une face de ce sac, une poche de propulsion de cet emballage par l'air comprimé du réseau.

Pour des questions de sécurité, par exemple lors du transport de prélèvements sanguins ou autres dans un réseau pneumatique d'un hôpital, il est déjà prévu d'utiliser des sacs qui sont munis d'un compartiment étanche ou d'une enveloppe double.

Cependant, des essais ont montré que ce type de structure était relativement fragile et pouvait subir des dommages notamment dans des réseaux de longueur importante.

Le but de l'invention est donc de résoudre ces problèmes.

A cet effet, l'invention a pour objet un emballage notamment pour le transport d'objets dans un réseau pneumatique, comportant un sac réalisé en matière plastique soudée et présentant une ouverture obturable par un volet rabattable préencollé et sur au moins une face de ce sac, une poche de propulsion de cet emballage par l'air comprimé du réseau, caractérisé en ce que chaque face du sac comporte entre trois et cinq feuilles de matière plastique, présentant chacune une épaisseur comprise entre 25 et 50 microns.

Suivant d'autres caractéristiques de l'invention :
- chaque face du sac comporte quatre feuilles présentant chacune une épaisseur de 30 microns ;
- le sac comporte sur sa périphérie deux lignes de soudure ; et
- le sac comporte une poche de propulsion sur chacune de ses faces.

L'invention sera mieux comprise à la lecture de la description qui va suivre, donnée uniquement à titre d'exemple et faite en se référant aux dessins annexés, sur lesquels :
- la Fig.1 représente une vue en perspective d'un exemple de réalisation d'un emballage selon l'invention ; et
- la Fig.2 représente une vue en coupe schématique de cet emballage.

On a en effet illustré sur ces figures, un emballage notamment pour le transport d'objets tels que des prélèvements sanguins ou autres, dans un réseau pneumatique implanté par exemple dans un hôpital ou autre.

Cet emballage est désigné par la référence générale 1 et comporte un sac désigné par la référence générale 2 réalisé en matière plastique soudée.

Ce sac présente à une extrémité, une ouverture désignée par la référence générale 3, obturable par un volet rabattable préencollé désigné par la référence générale 4.

A l'autre extrémité, ce sac comporte sur au moins l'une de ses faces, et de préférence sur chacune de celles-ci, une poche de propulsion de cet emballage par l'air comprimé du réseau.

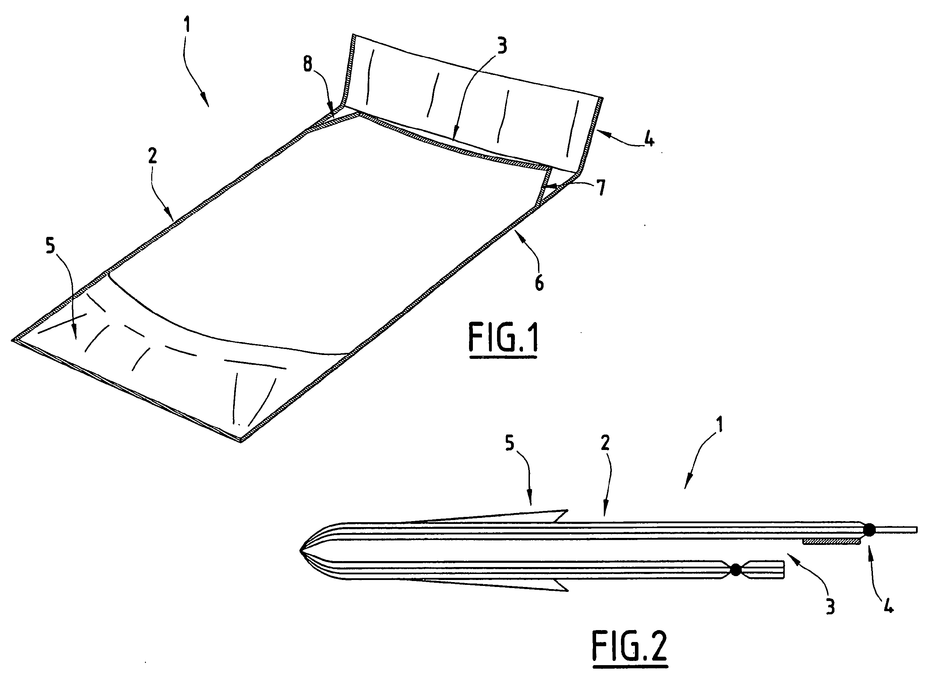

L'une de ces poches est illustrée sur la figure 1 et est désignée par la référence générale 5.

Le document EP-A-0 664 264 mentionné précédemment décrit en détail la réalisation d'un tel sac et de telles poches.

Comme cela est illustré, le sac présente sur sa périphérie au moins une ligne de soudure qui est désignée par la référence générale 6.

Dans l'exemple illustré, cette ligne de soudure s'étend alors sur les trois bords libres du sac pour délimiter l'ouverture 3 de l'emballage.

Chaque côté du sac comporte sur au moins une portion d'extrémité située à proximité de son ouverture, au moins deux lignes de soudure dont l'une correspond à la ligne de soudure 6 décrite précédemment et qui s'étend le long du bord du sac et dont l'autre peut être inclinée à partir de ce bord vers l'intérieur du sac afin de délimiter l'ouverture de celui-ci.

Ces lignes de soudures inclinées sont par exemple désignées par les références générales 7 et 8 sur cette figure.

Le sac présente alors au moins sur cette portion d'extrémité située à proximité de son ouverture, au moins deux lignes de soudure qui permettent d'obtenir une très bonne étanchéité de l'emballage lorsque le volet préencollé est rabattu pour fermer celui-ci.

Bien entendu, d'autres modes de réalisation peuvent être envisagés et d'autres configurations des lignes de soudure inclinées peuvent être envisagées.

De même une double ligne de soudure peut être prévue le long des trois bords du sac afin d'assurer encore une meilleure étanchéité de celui-ci.

En fait, et selon l'invention, chaque face du sac comporte entre trois et cinq feuilles de matière plastique, par exemple à base de polyéthylène, chacune d'une épaisseur comprise entre 25 et 50 microns (µm).

De préférence, chaque face du sac comporte quatre feuilles de ce type, chacune d'une épaisseur de 30 microns.

Ceci permet alors au sac de conserver une souplesse suffisante pour une telle application tout en présentant une bonne résistance à la dégradation.

En effet, des essais ont montré qu'une telle structure permettait de conserver l'étanchéité de l'emballage dans des réseaux de très grande longueur.

On conçoit alors que grâce à une telle structure, l'emballage selon l'invention est parfaitement adapté au transport d'objets tels que par exemple des prélèvements sanguins ou autres dans des réseaux pneumatiques implantés dans des hôpitaux en raison de leur bonne étanchéité permettant d'éviter toute contamination du réseau en cas de problèmes au niveau de l'objet tels que par exemple rupture ou fuite.

## Revendications

1. Emballage notamment pour le transport d'objets dans un réseau pneumatique, comportant un sac (2) réalisé en matière plastique soudée et présentant une ouverture (3) obturable par un volet rabattable préencollé (4) et sur au moins une face de ce sac, une poche (5) de propulsion de cet emballage par l'air comprimé du réseau, **caractérisé en ce que** chaque face du sac comporte entre trois et cinq feuilles de matière plastique, présentant chacune une épaisseur comprise entre 25 et 50 microns.

2. Emballage selon la revendication 1, **caractérisé en ce que** chaque face du sac (2) comporte quatre feuilles présentant chacune une épaisseur de 30 microns.

3. Emballage selon la revendication 1 ou 2, **caractérisé en ce que** le sac (2) comporte sur sa périphérie deux lignes de soudure.

4. Emballage selon l'une quelconque des revendications précédentes, **caractérisé en ce que** le sac (2) comporte une poche de propulsion (5) sur chacune de ses faces.

## Claims

1. Packaging, in particular for transporting objects in a pneumatic network, comprising a bag (2) which is produced from welded plastics material and which has an opening (3) which can be closed by means of a pre-pasted flap (4) which can be folded over and, on at least one face of this bag, a pocket (5) for propelling this packaging by means of the compressed air of the network, **characterised in that** each face of the bag comprises between three and five sheets of plastics material, each having a thickness of between 25 and 50 micrometres.

2. Packaging according to claim 1, **characterised in that** each face of the bag (2) comprises four sheets which each have a thickness of 30 micrometres.

3. Packaging according to claim 1 or 2, **characterised in that** the bag (2) comprises, at the periphery thereof, two weld lines.

4. Packaging according to any one of the preceding claims, **characterised in that** the bag (2) comprises a propulsion pocket (5) on each of the faces thereof.

## Patentansprüche

1. Verpackung, insbesondere für den Transport von Gegenständen in einem pneumatischen Netz, mit einem Beutel (2) aus geschweißtem Kunststoffmaterial, der eine Öffnung (3) aufweist, die durch eine umschlagbare, vorbeleimte Klappe (4) verschließbar ist und mit einer Tasche (5) zum Vortrieb der Verpackung durch Druckluft des Netzes, **dadurch gekennzeichnet, dass** jede Fläche des Beutels zwischen drei und fünf Lagen des Kunststoffmaterials umfaßt, die jeweils eine Stärke zwischen 25 und 50 µ aufweisen.

2. Verpackung gemäß Anspruch 1, **dadurch gekennzeichnet, dass** jede Fläche des Beutels (2) vier Lagen umfaßt, die jeweils eine Stärke von 34 µ aufweisen.

3. Verpackung gemäß Anspruch 1 oder 2, **dadurch gekennzeichnet, dass** der Beutel (2) an seinem Umfang zwei Schweißlinien aufweist.

4. Verpackung gemäß einem der vorhergehenden Ansprüche, **dadurch gekennzeichnet, dass** der Beutel (2) eine Vortriebstasche (5) auf jeder seiner Flächen aufweist.
